# EUROPEAN PATENT APPLICATION

(11) **EP 1 939 720 A2**
(43) Date of publication of application: **02.07.2008**
(21) Application number: 07115171.6
(22) Date of filing: 29.08.2007
(51) Int. Cl.: G06F 3/12

(54) **Print system and print job processing method**

(30) Priority: 21.12.2006 JP 2006344396
(71) Applicant: Canon Kabushiki Kaisha, Ohta-Ku, Tokyo 146-8501 (JP)
(72) Inventor: Fukasawa, Nobuaki, Canon Kabushiki Kaisha, Ohta-ku Tokyo (JP)
(74) Representative: Sharp, Alan Cooper

(57) **Abstract**

In a print job processing method, even if a user does not designate whether or not to perform a pause print in each print request, it is possible to at least automatically perform a print in an appropriate print mode. To do so, if a print apparatus for executing a print job is selected, an attribute of the selected print apparatus is determined. Then, if the determined attribute is within a permissible range for immediately performing the print job, the print apparatus immediately performs the print job. On the other hand, if the determined attribute is not within the permissible range, the print apparatus sets the print job to a pause print job. Further, the print apparatus determines an attribute of the received print job, and determines based on the determined attribute whether or not to perform a pause print based on the received print job.

## Description

### BACKGROUND OF THE INVENTION

### Field of the Invention

The present invention relates to a print system and a print job processing method for a print system in which a print apparatus receives a print job produced by a data processing apparatus on a network and performs printing based on the received print job.

### Description of the Related Art

Conventionally, in a network print system, if a computer (PC) from which a user performs a print request is physically distant from a print apparatus, the user may perform the print request by designating a pause print because he/she does not wish that a printed material is seen by others.

Here, it should be noted that the pause print is a certain print method in which print data transmitted to a print apparatus is temporarily stored and retained in the relevant print apparatus and then the retained print data is printed when a user instructs the print to start actually in front of the print apparatus. That is, in the pause print, it is possible to prevent that a printed material is seen by others because the user actually goes in front of the print apparatus during printing. More specifically, a confidential print for causing a printer to perform print in response to user's authentication is widely known as the pause print (see Japanese Patent Application Laid-Open No. 2003-341190).

However, for example, if a print apparatus has been installed and located adjacent a PC, it is unnecessary to temporarily store and retain print data in the print apparatus, because the possibility that printed material is directly seen by others is low. Accordingly, it is desirable that the print apparatus performs printing immediately after receiving print data (this operation is called immediate print).

Conventionally, a user designates whether to change over a print operation between the pause print and the immediate print when he/she actually performs a print request. Alternately, whether to change over the print operation between the pause print and the immediate print is set as a default through a driver of the print apparatus.

Incidentally, it has recently become possible to search various print apparatuses on a network through a Web service or the like, select a desired one of the searched print apparatuses, and perform a print request to the selected print apparatus.

However, in that case, the user could not previously perform setting including a setting to designate whether or not to perform pause print. For this reason, the user manually changed over the print operation every time he/she performs the setting, as described below.

(1) Example of changing over print requests based on a relation between an input-side apparatus and an output-side apparatus

If the user selects print apparatus physically distant from the PC from which the user performed the print request, he/she recognizes that the print apparatus is physically distant and requests the pause print. On the other hand, if the user selects the near print apparatus, he/she requests the immediate print.

(2) Example of changing over print requests based on user surroundings at a location where an output-side apparatus is installed

If the user recognizes that the selected print apparatus has been installed in a public space where a person who is outside user's field can be aware of it, the user requests the pause print. On the other hand, if the user selects print apparatus which has been installed in a private space, the user requests the immediate print.

(3) Example of changing over print requests based on a relation between a person and an output-side apparatus

If an administrator of the print apparatus is the department to which the user belongs, the user requests the immediate print. On the other hand, if the administrator is another department, the user requests the pause print.

Further, even if the user does not perform a search of print apparatuses but causes a previously recognized certain print apparatus to perform printing, it is conceivable that the distance between the PC and the relevant print apparatus is not static or stable because the user randomly carries the relevant PC from which he/she performs the print request. In such a case, it is necessary for the user to recognize the physical distance between the PC and the print apparatus and then change over the print request, as described in the above example (1).

For example, it is conceivable that a notebook PC which is ordinarily used in a living room is carried to a conference room, and conference minutes produced by the carried notebook PC in the conference room is printed by a printer inherently installed in the living room. Here, when the user uses the notebook PC in the living room as usual, he/she will wish to perform the immediate print. On the other hand, when the user uses in the conference room the notebook PC carried from the living room, he/she will wish to perform the pause print.

As just described, in the conventional print system, since changeover of kinds of print requests (that is, whether or not to retain a print request in the print apparatus) depends on a manual operation, the following problems (1) and (2) occur.

(1) If a user searches for a certain print apparatus and then performs print by selecting the searched print apparatus, it is necessary for the user to recognize what kind of apparatus the selected print apparatus is (for example, where the selected print apparatus has been installed, and which administrator administrates the selected print apparatus) and then designate whether or not to retain a print request in the selected print apparatus. This is inconvenient.

(2) Various kinds of human errors occur. For example, the immediate print is erroneously designated in the case where the pause print should be designated, or the pause print is erroneously designated in the case where immediate print is necessary.

### SUMMARY OF THE INVENTION

One aim of the present invention is to provide a print job processing method which addresses the above described problems.

Further, another aim of the present invention is to provide a mechanism which can automatically change over, every time a user performs a print request, whether or not to retain the print request.

According to a first aspect of the present invention, there is provided a data processing apparatus as specified in claims 1 to 6. According to a second aspect of the present invention, there is provided a printing apparatus as specified in claims 7 to 11. According to a third aspect of the present invention, there is provided a print system as specified in claim 12. According to another aspect of the present invention, there is provided a data processing method as specified in claims 12 or 13.

The above-described and other features of the present invention will become apparent from the following description of the embodiments with reference to the attached drawings.

### BRIEF DESCRIPTION OF THE DRAWINGS

FIG. 1 is a diagram showing a print system according a first embodiment of the present invention.

FIG. 2 is a block diagram of the PC (130) illustrated in FIG. 1.

FIG. 3 is a block diagram showing the print apparatus illustrated in FIG. 1.

FIG. 4 is a flow chart illustrating an example of a first data processing procedure in the print apparatus according to the present invention.

FIG. 5 is a flow chart illustrating a data processing procedure in a conventional print system.

FIG. 6 is a diagram illustrating an example of distribution of pause print and normal (immediate) print in the print system according to the present invention.

FIG. 7 is a flow chart illustrating an example of a first data processing procedure in a data processing apparatus applicable to the print system of the present invention.

FIG. 8 is a flow chart illustrating an example of a second data processing procedure in the data processing apparatus applicable to the print system according to the present invention.

FIG. 9 is a diagram illustrating an example of distribution of pause print and normal (immediate) print in the print system according to the present invention.

FIG. 10 is a flow chart illustrating an example of a third data processing procedure in the data processing apparatus applicable to the print system according to the present invention.

FIG. 11 is a flow chart illustrating an example of a second data processing procedure in the print apparatus according to the present invention.

FIG. 12 is a flow chart illustrating an example of a third data processing procedure in the print apparatus according to the present invention.

FIG. 13 is a diagram illustrating an example of device information which is acquired from the print apparatus by the data processing apparatus illustrated in FIG. 2.

FIG. 14 is a diagram illustrating an example of the device information which is acquired from the print apparatus by the data processing apparatus illustrated in FIG. 2.

FIG. 15 is a diagram illustrating an example of a print setting screen to be displayed on the CRT illustrated in FIG. 2.

FIG. 16 is a diagram for describing a memory map of a storage medium which stores therein various kinds of data processing programs capable of being read by the data processing apparatus according to the present invention.

FIG. 17 is a diagram for describing a memory map of the storage medium which stores therein various kinds of data processing programs capable of being read by the data processing apparatus according to the present invention.

### DESCRIPTION OF THE EMBODIMENTS

Exemplary embodiments of the present invention will now be described with reference to the attached drawings.

(Description of System Constitution)

(First Embodiment)

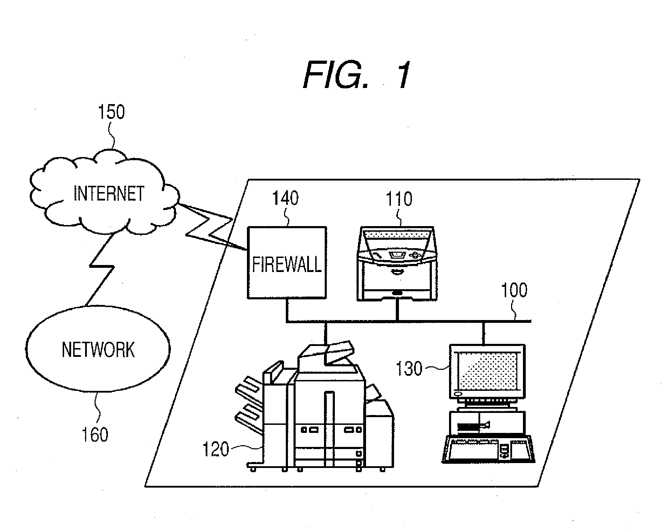

FIG. 1 is a diagram for describing the constitution of a print system according the first embodiment of the present invention. Here, it should be noted that the relevant print system includes an input apparatus which requests printing through a network, and an output apparatus which performs the printing. In the following description, the input apparatus is also called a PC (personal computer) and the output apparatus is also called a print apparatus. However, in addition to the PC, for example, a scanner, a camera, a printer having print data, or the like is applicable as the input apparatus. That is, the input apparatus should not be interpreted limitedly in the present invention.

In FIG. 1, the print system includes an SFP (Single Function Printer) 110.

Further, the print system includes an MFP (Multi Function Printer) 120. Furthermore, the MFP 120 includes a scanner (scanning function) unit, a printer (printing function) unit, a facsimile (facsimile function) unit, a file (filing function) unit and the like, and also includes a controller unit for controlling the respective function units. Here, the controller unit includes later-described hardware resources.

In FIG. 1, a PC (personal computer) 130, which includes a keyboard and a pointing device as an input device and also includes a display device or the like as an output device, is connected to a LAN (local area network) 100. Here, the PC 130 may be also called a computer apparatus 130, and the details thereof will be described later.

A firewall 140 establishes connection between the LAN 100 and the external Internet 150. Here, the LAN 100 can be further connected to another network 160 through the firewall 140 and the Internet 150.

A user first produces a print job through the printer driver of the PC 130, and transfers the produced print job to the print apparatus (that is, the SFP 110 or the MFP 120). Then, after receiving the print job, the print apparatus performs a print process based on the received print job.

In the present embodiment, the user searches by using the PC 130 the SFP 110 or the MFP 120 which acts as the print apparatus on the LAN 100. For example, in case of selecting the MFP 120 for the print process, it is automatically determined whether to perform pause printing or to perform immediate printing for the print job in accordance with a set permissible range. Incidentally, in the following, it should be noted that the print mode which excludes the pause print mode but includes the immediate print mode may be called normal print. Furthermore, it should be noted that the pause print mode corresponds to the operation that the print job is once retained (or held, or stored) in the print apparatus and then print based on the retained (held) print job starts in response to, for example, a user's output instruction on the print apparatus side. That is, so-called confidential print or the like is equivalent to the pause print mode. More specifically, in the pause print mode, the print job is temporarily stored in a box area secured in the storage unit of the print apparatus to which the relevant print job was transferred. Then, the user inputs authentication information through the operation unit of the print apparatus in which the relevant print job has been stored, and it is possible to start printing only when the input authentication information coincides with registered authentication information in the relevant print apparatus. However, except for the confidential print mode, the print job may merely be retained in the print apparatus to which the relevant print job was transferred. Further, the transferred print job may be stored in another storage unit (that is, a storage unit other than the storage unit of the print apparatus to which the relevant print job was transferred). Furthermore, in the normal print mode, when print preparation is complete in the print apparatus to which the print job was transferred, printing automatically starts (that is, printing starts without any user's print start instruction input from the operation unit of the relevant print apparatus). That is, in the normal print mode, printing starts without retaining the print job in the print apparatus.

In the present embodiment, in case of performing the pause print, a warmup routine starts at the time when the print job is received, as described later. Thus, it is possible to start printing earlier.

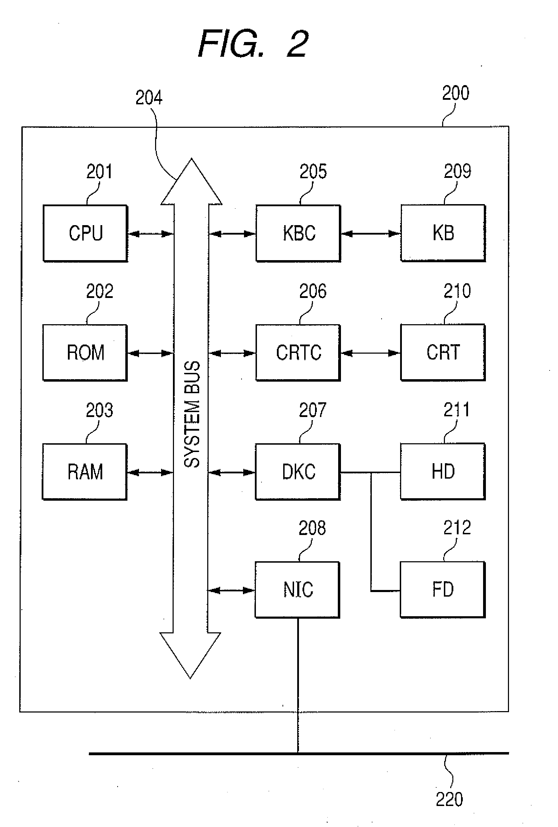

FIG. 2 is a block diagram for describing the constitution of the PC 130 illustrated in FIG. 1. Here, in FIG. 2, a PC 200 is equivalent to the PC 130 of FIG. 1. Incidentally, it should be noted that FIG. 2 illustrates an example of the internal constitution of a commonly used personal computer.

In FIG. 2, the PC 200 includes a CPU 201 which executes various software programs stored in a ROM 202 or an HD (hard disk) 211 and supplied from an FD (floppy- disk) 212. Here, it should be noted that the CPU 201 is provided to totally control various devices connected to a system bus 204.

A RAM 203 functions as a main memory, a working area and the like of the CPU 201, and a KBC (keyboard controller) 205 controls various instructions input from a KB (keyboard) 209, a pointing device (not shown) and the like.

A CRTC (CRT controller) 206 controls a display state of a CRT (CRT display) 210, and a DKC (disk controller) 207 controls accessing to the HD 211 and the FD 212.

A boot program, programs for achieving the present embodiment, various applications, edited files, user files and the like are stored in the HD 211. Furthermore, a printer driver which functions as a device driver has been installed in the HD 211, and the printer driver operates to transfer the produced print job to the MFP 120 and the SFP 110 illustrated in FIG. 1. In addition, the printer driver has a function to automatically produce, based on a set permissible range (condition), the print job concerning a print request, as either one of a first print job for causing to perform normal printing and a second print job for causing to perform the pause print.

An NIC (network interface card) 208 bidirectionally exchanges various data between the PC 200 and a network printer, another network device or another PC through a LAN 220.

It should be noted that, in the present embodiment, the LAN 220 is equivalent to the LAN 100 illustrated in FIG. 1.

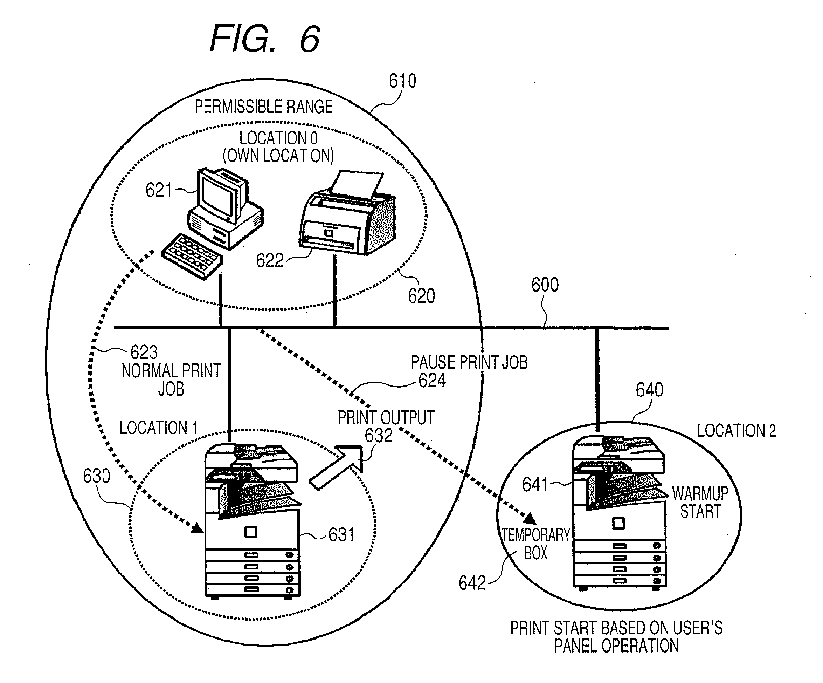

As described above, the PC 130 (PC 200) in the present embodiment has a so-called setting function for setting the permissible range in which the print job can be executed as the normal print. How to set the permissible range will be described later with reference to FIG. 6 and the like.

Further, the printer driver has a determination function for determining which of the print apparatuses searched and selected in a network device search by a user's operation belongs to the permissible range. Then, if the print apparatus selected by the user's operation is determined to be within the permissible range, the printer driver produces the first print job for performing the normal print based on the print job. This is because it is unnecessary for the PC 130 (PC 200) to perform printing according to the confidential print function since a print apparatus belonging to the set permissible range has been selected.

On the other hand, if it is determined by the printer driver that the selected print apparatus is out of the permissible range, the printer driver produces the second print job for temporarily storing the print job in the storage unit provided in the selected print apparatus. This is because, since the selected print apparatus is outside the set permissible range, it is inappropriate to automatically start print as in the normal print mode. In other words, the print job for performing the pause print is transferred to the selected print apparatus.

However, it is unnecessary for the user to previously know which of the first print job and the second print job is produced. Instead, the printer driver determines whether or not the selected print apparatus belongs to the permissible range. Thus, the first print job and the second print job are automatically distributed and produced.

Incidentally, in a case where the above-described determination function is provided on the print apparatus side in the print system, as described later, the PC 130 (PC 200) adds attribute information to a print job and transfers the print job to which the attribute information has been added. Here, it should be noted that the attribute information includes location information for specifying the transmission source of the print job, and the like.

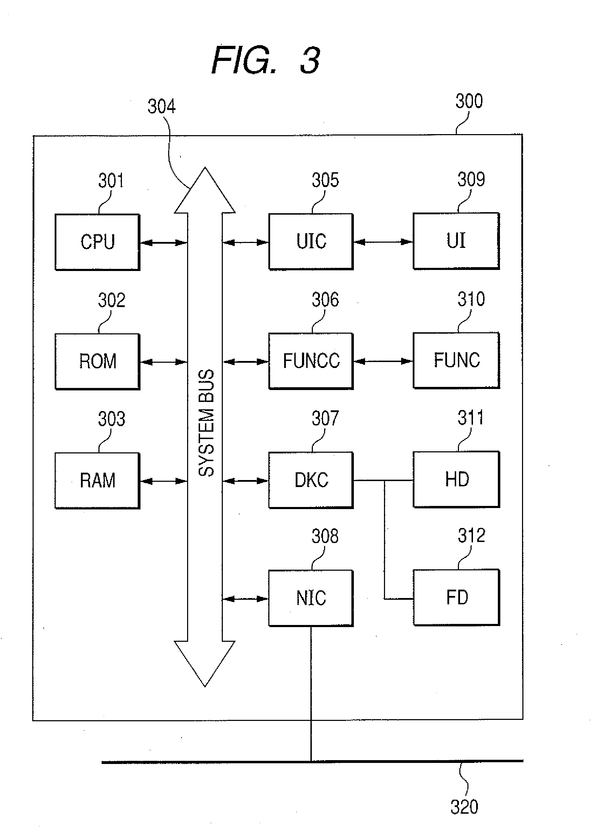

FIG. 3 is a block diagram for describing the constitution of the print apparatus illustrated in FIG. 1. Incidentally, it should be noted that FIG. 3 illustrates an example of the internal constitution of the hardware of the MFP 120 or the SFP 110 illustrated in FIG. 1.

In FIG. 3, a print apparatus 300 is equivalent to both the SFP 110 and the MFP 120 illustrated in FIG. 1.

In FIG. 3, the print apparatus 300 includes a CPU 301 which executes various software programs stored in a ROM 302 or an HD 311 and supplied from an FD 312. Here, it should be noted that the CPU 301 is provided to totally control various devices connected to a system bus 304.

A RAM 303 functions as a main memory, a working area and the like of the CPU 301, and a UIC (user interface controller) 305 controls a display state of a UI (user interface) 309 and various instructions input from the UI 309.

A function controller (FUNCC) 306 achieves and controls a FUNC (function) which is equivalent to a specific function of each device.

More specifically, the FUNCC 306 has the FUNC 310 for each function. Further, if the print apparatus 300 is a black-and-white printer, the FUNC 310 includes a black-and-white print engine controller and a black-and-white print engine. On the other hand, if the print apparatus 300 is a color printer, the FUNC 310 includes a color print engine controller and a color print engine.

Further, if the print apparatus 300 is an MFP, the print apparatus 300 includes the FUNCC 306 and the FUNC 310 for each function.

A disk controller (DKC) 307 controls accessing to the HD 311 and the FD 312. Incidentally, the HD 311 and the FD 312 respectively function to store a boot program, programs for achieving the present embodiment, and various applications, or act as a storage area for achieving a box function to store data files.

A network interface controller (NIC) 308 bidirectionally exchanges various data between the print apparatus 300 and a network printer, another network device or another PC through a LAN 320.

In the present embodiment, the LAN 320 is equivalent to the LAN 100 illustrated in FIG. 1.

The automatic producing process of the first print job and the second print job will now be described using, for example, the MFP 120.

The print apparatus is constituted to be able to receive a print job from any one of plural input apparatuses on the LAN 320.

First, the permissible range in which the normal print can be performed based on the received print job is set, in response to an input instruction or the like from the operation unit. Here, information indicating the set permissible range is stored in a non-volatile storage unit such as the HD 311 or the like, and the stored information can be freely changed and updated in consideration of a change in the system configuration or constitution. In any case, it should be noted that the permissible range acts as a condition for determining whether to perform the normal print or the pause print based on the received print job.

In the MFP 120 constituted as described above, it is determined by the CPU 301 (according to a later-described control procedure) whether or not the print job received through the network belongs to the permissible range based on the attribute information added to the relevant print job. Then, if it is determined by the CPU 301 that the attribute information added to the received print job is within the permissible range, the relevant print job is not retained, and normal printing is performed based on the relevant print job. That is, the relevant print job is directly extracted into an image by the FUNC 310, and then the acquired image is output and printed.

On the other hand, if it is determined by the CPU 301 that the attribute information added to the received print job is out of the permissible range, the relevant print job is temporarily stored and thus retained in the box area provided in the selected MFP 120. Here, although the box area is generally secured on the HD 311, this area may be secured on another memory device. Then, if it is instructed to start printing by the user through, e.g., the UI 309 of the MFP 120, printing is performed based on the retained print job.

Here, it should be noted that the attribute information includes location information for specifying the transmission source of the print job, and the like. Accordingly, in a case where the permissible range has been set as later described, it is possible on the UI 309 to determine whether or not the attribute information is within the permissible range, based on the location information and the like.

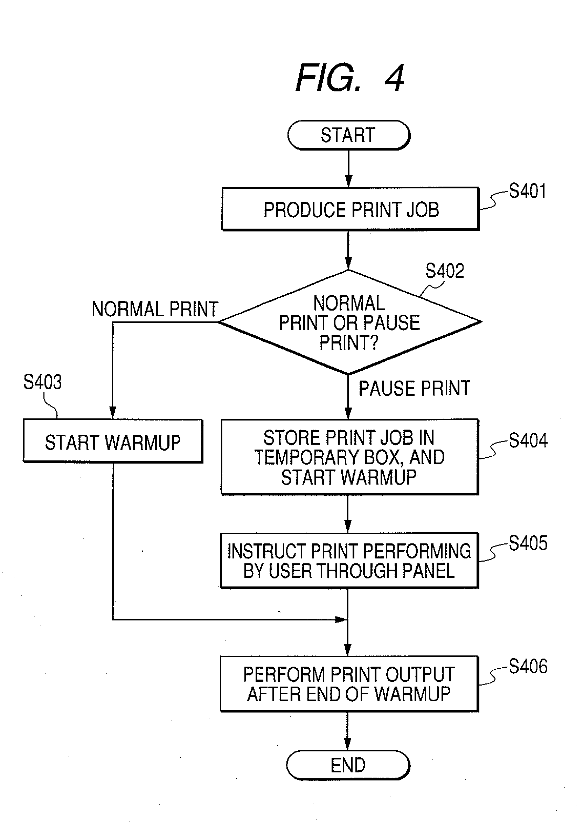

FIG. 4 is a flow chart illustrating an example of a first data processing procedure in the print apparatus according to the present embodiment. The first data processing procedure is equivalent to an example of the print execution process performed by the print system illustrated in FIG. 1. In other words, the first data processing procedure is equivalent to an example that a warmup of the print (or printer) engine of the print apparatus is performed when a print job is received. Incidentally, it should be noted that respective steps S401, S402, S403, S404, S405 and S406 in FIG. 4 are achieved when the CPU 301 in the SFP 110 or the MFP 120 illustrated in FIG. 1 loads the control program stored in the ROM 302, the HD 311 or the FD 312 to the RAM 303 and then executes the loaded control program.

Initially, in the step 5401, a print job is received from the input apparatus such as the PC 130 (PC 200) or the like, and the received print job is produced on the HD 311. Then, in the step S402, it is determined based on the information added to the print job or the attribute of the print job whether to perform the normal print or the pause print. More specifically, as described later, in case of determining whether to perform the normal print or the pause print on the side of the PC 130 (PC 200), since information indicating either one of the normal print and the pause print is included in the print job, such determination is performed based on a kind of print job. Further, in case of determining whether to perform the normal print or the pause print on the side of the print apparatus, such determination is performed based on location information, user information and/or the like (that is, single information or plural kinds of information) added to the print job produced by the PC 130 (PC 200).

Furthermore, in case of determining whether to perform the normal print or the pause print on the side of the print apparatus, the information added to the print job can be changed by limited authenticated users such as an administrator and the like.

If it is determined in the step S402 to perform the normal print, the warmup starts in the S403. Then, if the warmup ends, printing is performed in the step S406, and the print execution process ends.

Here, it should be noted that the warmup is a pre-process which is necessary to perform printing. For example, to warm the print engine is included in such a warmup process. In any case, when the warmup process ends, it is possible to immediately perform the printing.

On the other hand, if it is determined in the step S402 to perform the pause print, the flow advances to the step S404 to temporarily store the print job produced in the step S401 in the box area secured on the HD 311 or the like. At the same time, the warmup process for the printing starts.

Next, in the step S405, the user instructs the print apparatus to perform printing using the UI 309. In this connection, if the warmup process ends and it is thus possible to perform the printing, the printing is immediately performed in the step S406. Then, the print execution process ends.

Here, it should be noted that the information input from the UI 309 in the step S405 includes the authentication information set in the print job stored as the pause print. For example, the authentication information may include a password, a user ID and the like.

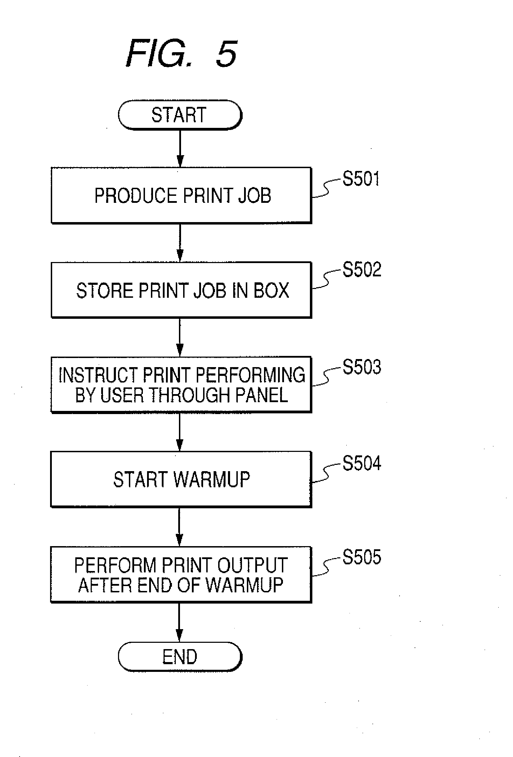

FIG. 5 is a flow chart illustrating a data processing procedure in a conventional print system. The relevant data processing procedure is equivalent to the process of the whole print system from reading of a print job stored in the box area secured on an HD to print execution based on the read print job. In other words, the relevant data processing procedure corresponds to the pause print. Incidentally, it should be noted that respective steps S501, S502, S503, S504 and S505 in FIG. 5 are achieved when the CPU 301 in the SFP 110 or the MFP 120 illustrated in FIG. 1 loads the control program stored in the ROM 302, the HD 311 or the FD 312 to the RAM 303 and then executes the loaded control program.

First, the print job is produced in the step S501. Then, in the step S502, the produced print job is stored in the box area secured on the HD according to previous setting by a user. Here, a warmup of the print engine is not performed at that time. After then, in the step S503, it is instructed by the user from the UI 309 to perform print based on the print job stored in the box area. Thus, the print apparatus starts the warmup in the S504. Then, when the warmup ends, the flow advances to the S505 to perform the printing by reading the stored print job from the box area secured on the HD, and the conventional print execution process ends.

As just described, in the print process based on the print job in the conventional print system, in case of storing the print job in the box area secured on the HD under the job control previously set by the user, the following problem occurs.

That is, in the conventional print process based on the print job stored in the box area as illustrated in FIG. 5, the user instructs from the UI 309 to perform printing (S503), and then the warmup starts (5504). Accordingly, a time necessary for the process from the step S503 to the step S505 is long as compared with a time necessary for the process from the step S405 to the step S406 illustrated in FIG. 4.

As just described, the print process based on the print job stored on the box area according to the present embodiment as illustrated in FIG. 4 is different from the print process based on the print job stored on the box area as illustrated in FIG. 5, as in FIG. 4, the warmup starts at the time when the print job is stored in the box area. For this reason, in the present embodiment, since the warmup has already started not later than the step S405, it is possible to shorten the time from the step S405 to the step S406 at which the printing is performed.

FIG. 6 is a diagram illustrating an example of distribution of the pause print and the normal (immediate) print in the print system according to the present embodiment. In this example, in case of determining whether or not the print job belongs to the range capable of permitting normal printing, the print job is distributed based on "location" where the MFP which receives the print job from the transfer source (i.e., PC side) is installed.

In this example, such a permissible range is determined on the side of producing and transmitting the print job.

In FIG. 6, a PC 621 and print apparatuses 622, 631 and 641 are connected to a LAN 600.

A permissible range 610 for the normal print has been set to the PC 621 by, for example, a printer driver installed in the PC 621. In the present embodiment, a location 0 (range 620) and a location 1 (range 630) are included in the permissible range 610. The print apparatus 622 has been set as being installed at the location 0 (range 620). In this case, since the location 0 and the location 1 are close to the location of the print apparatus 622 itself, the location 0 and the location 1 are set as the ranges capable of permitting the normal print mode. This is the condition for permitting normal printing if the location where the PC 621 has been installed is close to the location where the print apparatus has been installed.The print apparatus is caused to perform using the pause print mode if the location where the PC 621 has been installed is distant from the location where the print apparatus has been installed.

The print apparatus 631 has been set as being installed at the location 1 (range 630). This setting is performed by a PC of an administrator who has authority to do so on the network, for example, through the printer driver of the PC. Alternatively, this setting is performed by the administrator from the operation unit of the print apparatus 631 in an administrator mode.

The location 2 (range 640) is not included in the set permissible range 610. Further, the print apparatus 641 has been set as being installed at the location 2 (range 640), for example, by the printer driver thereof. Furthermore, a temporary box area 642 is secured in the HD 311 provided in the print apparatus 641.

In FIG. 6, a case where the devices communicably connected to the LAN 600 are searched from the PC 621, the print apparatuses 622, 631 and 641 are resultingly detected, and the PC 621 causes the print apparatus 631 to perform print will be described. In this case, even if any one of the print apparatuses 622, 631 and 641 is in a sleep state, it is possible to detect the relevant print apparatus by transmitting a specific command thereto.

That is, according to a response to the search from the PC 621 or a request from the PC 621, the print apparatus 631 notifies the PC 621 of the location where the print apparatus 631 itself has been installed, as the location 1. Here, the location 1 is equivalent to the range 630 which is included in the permissible range 610 of the PC 621. For this reason, when the PC 621 causes the print apparatus 631 to perform printing, the printer driver of the PC 621 produces and transmits the job of the normal print type to the print apparatus 631 (normal print job 623). Then, the print apparatus 631 which received the normal print job transmitted by the printer driver of the PC 621 performs the requested print (printing 632).

Further, according to a response to the search from the PC 621 or a request from the PC 621, the print apparatus 641 notifies the PC 621 of the location where the print apparatus 641 itself has been installed, as the location 2. Here, the location 2 is equivalent to the range 640 which is not included in the permissible range 610 of the PC 621.

For this reason, when the PC 621 causes the print apparatus 641 to print, the printer driver of the PC 621 produces and transmits the job of the pause print type to the print apparatus 641. Here, the printer driver of the PC 621 produces a pause print job 624.

The print apparatus 641 which received the pause print job from the PC 621 temporarily stores the received job in the box area 642, and at the same time the print apparatus 641 starts the warmup.

Then, the user moves from the location 0, stands in front of the print apparatus 641 at the location 2, and gives a print start instruction by operating the UI 309 on the print apparatus 641, thereby starting printing.

Here, in the print start instruction, the user inputs a user ID and/or a password to specify the user. Incidentally, there are the following instructions for starting to specify the job in the temporary box area 642 and perform printing within the scope of user's authority.

That is, as a first instruction, there is the instruction for specifying the user by an IC card, and specifying the job in the temporary box area 642 and performing print within the scope of the user's authority. As a second instruction, there is the instruction for specifying the user and the job in the temporary box area 642 and performing print, by a portable terminal. Further, as a third instruction, there is the instruction for directly specifying the job in the temporary box area 642 and performing print, by using a job ID or the like. Although above first to third instructions are well known, the present embodiment is not limited to them. That is, the present embodiment includes all actions to start print through operations to the print apparatus, but does not depend on any kind of operation, any method of operation, and any equipment to be used.

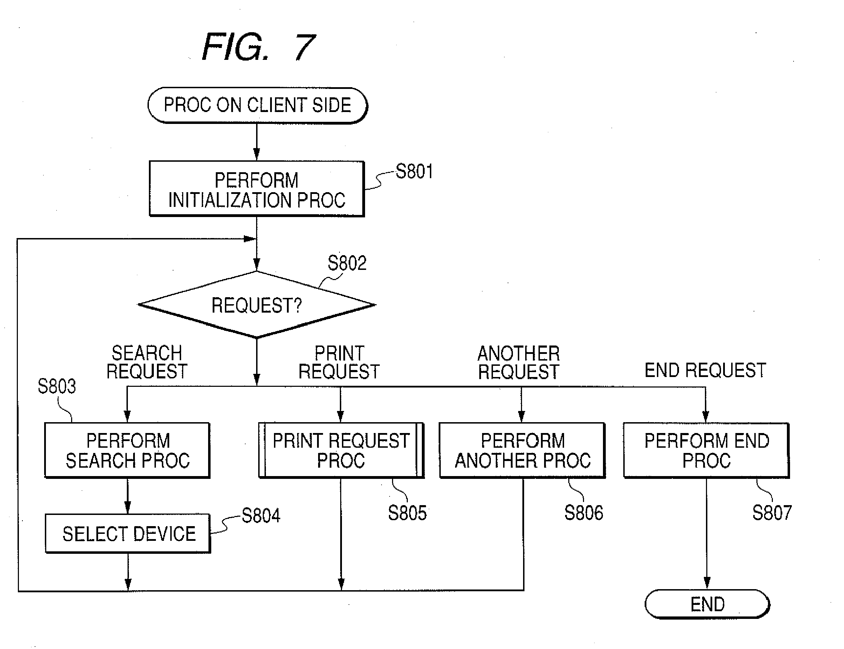

FIG. 7 is a flow chart illustrating an example of a first data processing method to be performed in the data processing apparatus which is applicable to the print system according to the present embodiment. Here, it should be noted that the first data processing method is equivalent to the print process on the client side which is a side of producing and/or transmitting a job. Further, it should be noted that the first data processing method is achieved in a case where the CPU of the PC 621 at the location 0 loads the control program stored in the ROM 202, the HD 211 or the FD 212 to the RAM 203 and executes the loaded program. The first data processing method illustrated in the flow chart of FIG. 7 includes respective steps S801, S802, S803, 5804, S805, 5806 and 5807.

Initially, if a power source is turned on, an initialization process is performed in the step S801, and it waits for a user's request in the step 5802. Then, in the step S802, the process is distributed based on the user's request. More specifically, if the user's request is a search request, the flow advances to the step S803.

A network device search process is performed in the step S803, a print apparatus for performing the process based on a print job is selected from the searched print apparatuses in the step S804, and the flow again returns to the step S802 to wait for the next request.

Further, if it is determined in the step S802 that the user's request is a print request, the flow advances to the step S805 to perform the print request process, and the flow again returns to the step S802 to wait for the next request.

Furthermore, if it is determined in the step S802 that the user's request is another request, the flow advances to the step S806 to perform the process according to the user's request, and the flow again returns to the step S802 to wait for a next request.

Furthermore, if it is determined in the step S802 that the user's request is an end request, the flow advances to the step S807 to perform the end process, and then the operation on the client side ends.

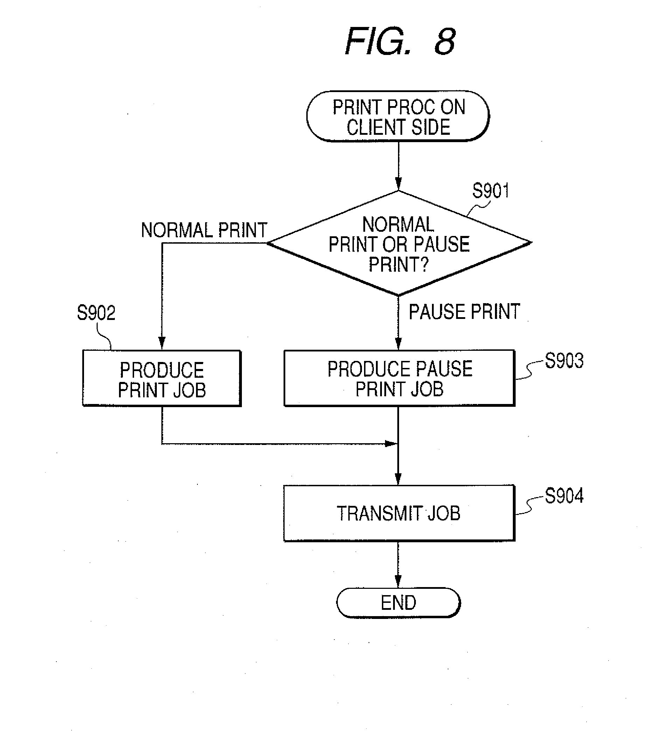

FIG. 8 is a flow chart illustrating an example of a second data processing method to be performed in the data processing apparatus which is applicable to the print system according to the present embodiment. Here, it should be noted that the second data processing method is equivalent to an example of the print request process (step S805) in FIG. 7 to be performed in the case of determining the permissible range on the client side being the side of producing and/or transmitting the job. Further, it should be noted that, in FIG. 6, the second data processing method is achieved in a case where the CPU of the PC 621 at the location 0 loads the control program stored in the ROM 202, the HD 211 or the FD 212 to the RAM 203 and executes the loaded program. The second data processing method illustrated in the flow chart of FIG. 8 includes respective steps S901, S902, S903 and S904.

Initially, if it is determined in the step S901 that a destination to which the print job is transmitted, that is, the print apparatus selected to perform printing, is within the permissible range set on the client side, the flow advances to the step S902 to produce the normal print job. Then, in the step S904, the produced print job is transmitted to the designated print apparatus through the printer driver, and the process ends.

On the other hand, if it is determined in the step S901 that the destination to which the print job is transmitted is outside the permissible range, the flow advances to the step S903 to produce the pause print job. Then, in the step S904, the produced print job is transmitted to the designated print apparatus, and the process ends.

(Second Embodiment)

As described above, in the first embodiment, the printer driver (PC) first determines, based on its own location with respect to the selected print apparatus, whether or not the selected print apparatus is within the previously set permissible range. Then, the printer driver (PC) transfers the normal print job or the pause print job to the selected print apparatus based on the determined result. That is, in the first embodiment, the kind of print job to be transferred to the selected print apparatus is determined on the PC side. On the other hand, a kind of print job to be transferred may be determined on the print apparatus side. For such a purpose, on the PC side, the information indicating a standard for determining whether to specify the print job to be a normal print job or a pause print job may be added to the print job, and then the acquired print job may be transferred to the print apparatus side. Subsequently, on the print apparatus side, the process of the print job may be actually specified to be a normal print job or a pause print job based on the information added to the print job received from the host (PC).

In the present case, the PC which is the transfer source of the print job produces the print job to which the determinable information indicating the job kind has been added and transfers the produced print job to the selected print apparatus.

In the following, the process to be performed on the print apparatus side which controls the normal print and the pause print based on the information indicating the print job kind will be described in detail.

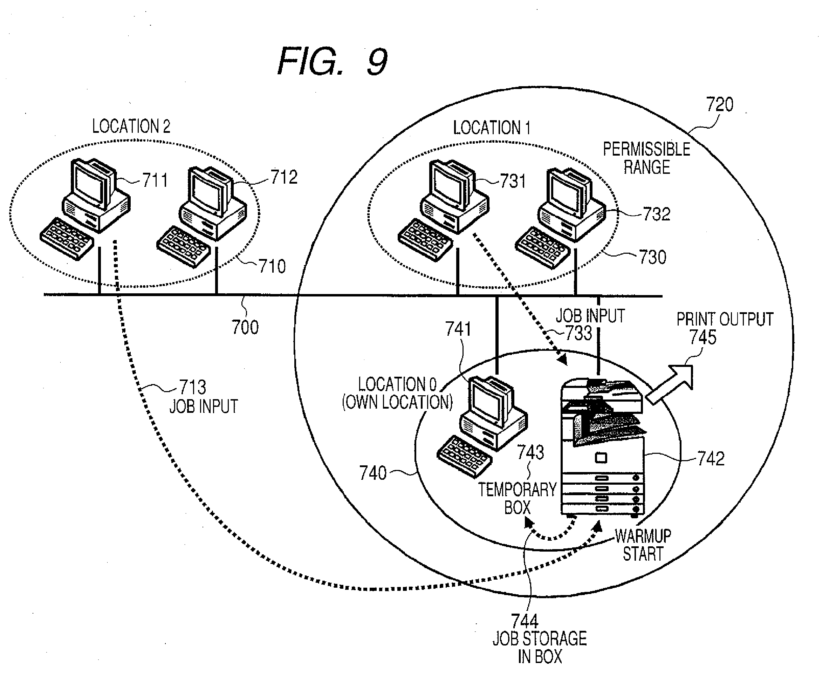

FIG. 9 is a diagram illustrating an example of distribution of the pause print and the normal (immediate) print in the print system according to the present embodiment. In this example, in case of determining whether or not the print job belongs to the range capable of permitting the normal print mode, the print job is specified based on "location" where the MFP which receives the print job from the transfer source (i.e., PC side) of transferring the relevant print job and performs print based on the received print job is installed.

In this example, such a permissible range is determined on the side of receiving or performing the print job.

In FIG. 9, a PC 711, a PC 712, a PC 731, a PC 732, a PC 741 and a print apparatus 742 are connected to a LAN 700. Here, a case where a user operates the PC 711 and the PC 731 to transmit a print job to the print apparatus 742 to perform print will be described by way of example.

A permissible range 720 has been set to the PC 741. Further, a location 0 (range 740) and a location 1 (range 730) are included in the permissible range 720. The PC 731 has been set as being installed at the location 1 (range 730).

The PC 711 has been set as being installed at a location 2 (range 710) which is not included in the permissible range 720. The print apparatus 742 has a temporary box area 743. Here, it should be noted that, as well as the first embodiment, such location information is set as the condition for determining whether to perform the normal print or the pause print.

In FIG. 9, a case where a device is searched from the PC 711 and PC 731, the print apparatus 742 is resultingly detected, and the detected print apparatus 742 performs printing, will be described.

That is, the PC 731 detects and determines the print apparatus 742 as the apparatus which should perform printing. Accordingly, when the printer driver of the PC 731 produces a print job, the location information representing the location 1 is set and produced as the information indicating the print job producing source.

Then, the printer driver of the PC 731 transmits the produced print job to the print apparatus 742 (job input 733). The print apparatus 742 which received the job input 733 from the PC 731 extracts the location information of the print job producing source added to the print job. Then, the print apparatus 742 determines that the producing source of the received print job is at the location 1 (range 730) which is within the permissible range for the print apparatus 742. Accordingly, the print apparatus 742 performs normal printing based on the print job received from the PC 731 being the client within the permissible range (printing 745) .

On the other hand, if the print job is produced by the printer driver of the PC 711 so that the location information of the producing source indicates the location 2 (range 710), the job input 713 from the PC 711 is determined by the print apparatus 742 to be outside the permissible range. For this reason, the print job produced by the printer driver of the PC 711 is performed as the pause print. That is, in the print apparatus 742, the print job received from the PC 711 is stored in the temporary box area 743 (box storage 744). At the same time, the print apparatus 742 starts warming up, and waits for a print start instruction through a user's input via the UI 309. Here, it should be noted that the above-described user authentication information is input as the print start instruction.

After this, the user moves from the location 2, stands in front of the print apparatus 742 at the location 0, and gives the print start instruction by operating the UI 309 on the print apparatus 742, thereby starting printing. As well as the case illustrated in FIG. 6, the present embodiment does not depend on any particular kind of panel operation, any method of operation, and any equipment to be used.

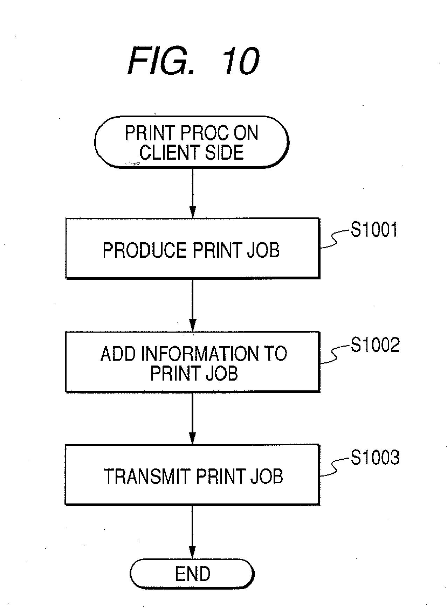

FIG. 10 is a flow chart illustrating an example of a third data processing method to be performed in the data processing apparatus which is applicable to the print system according to the present embodiment. Here, it should be noted that the third data processing method is equivalent to an example of the print request process (step S805) in FIG. 7 to be performed in case of determining the permissible range on the print apparatus side being the side of receiving and/or performing the job. Further, it should be noted that, in FIG. 6, the third data processing method is achieved in a case where the CPU of the PC at the location 0 loads the control program stored in the ROM 202, the HD 211 or the FD 212 to the RAM 203 and executes the loaded program. The third data processing method illustrated in the flow chart of FIG. 10 includes respective steps S1001, S1002 and S1003.

Initially, the print job is produced through the printer driver in step S1001, and the information for causing the print apparatus side to determine whether normal printing or pause printing should be performed is added to the print job in step S1002. In the example of the PC 711 illustrated in FIG. 9, the information indicating the location 2 is added as the location information. Then, in step S1003, the print job produced through the printer driver is transmitted to the print apparatus which should perform printing, and the process ends. Here, it should be noted that the above operation is applicable to the PC 711 and the PC 731 of FIG. 9 which together realize the client side according to the present embodiment.

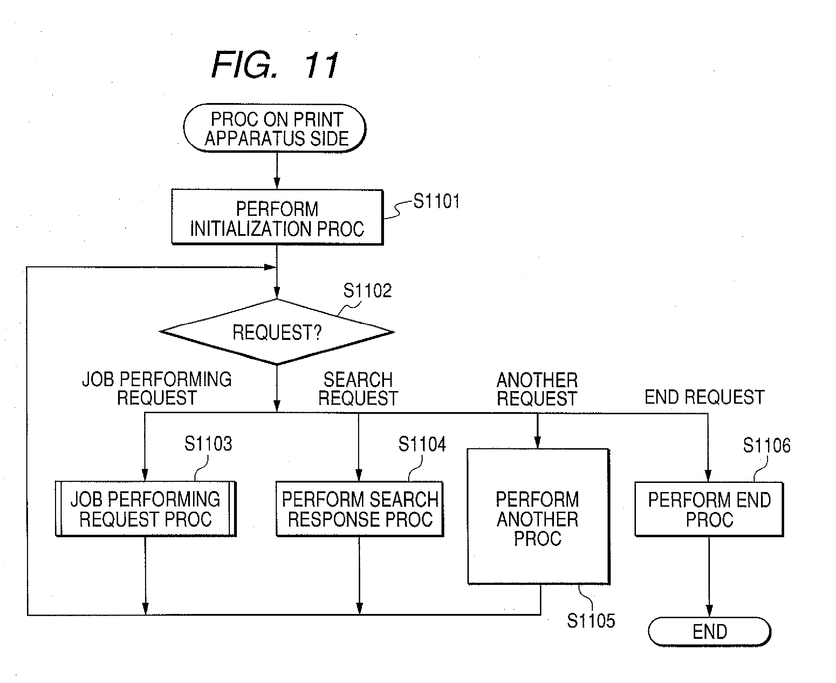

FIG. 11 is a flow chart illustrating an example of a second data processing procedure in the print apparatus according to the embodiment. Here, it should be noted that the second data processing procedure is equivalent to the process on the print apparatus side, which is the side of receiving a job and performing printing. Further, it should be noted that the second data processing procedure is achieved in a case where the CPU of the print apparatus 742 at the location 0 loads the control program stored in the ROM 302, the HD 311 or the FD 312 to the RAM 203 and executes the loaded program. The second data processing procedure illustrated in the flow chart of FIG. 11 includes respective steps S1101, S1102, S1103, S1104, S1105 and S1106.

Initially, when the power is turned on, an initialization process is performed in step S1101, and the apparatus waits for an external request in step S1102.

Then, in step S1102, the process is distributed based on the external request. More specifically, if the external request is a job performing request, the flow advances to the step S1103 to perform a job performing request process. Then, the flow returns to the step S1102 to again wait for a next external request.

If it is determined in the step S1102 that the external request is a search request, the flow advances to the step S1104 to perform a search response process in a case where the relevant print apparatus itself conforms to a searching condition. Then, the flow returns to the step S1102 to again wait for the next external request.

If it is determined in the step S1102 that the external request is a different request, the flow advances to the step S1105 to perform a process other than the job performing request process, the search response process and an end process. Then, the flow returns to the step S1102 to again wait for the next external request.

If it is determined in the step S1102 that the external request is an end request, the flow advances to the step S1106 to perform the end process, and then the operation on the print apparatus side ends.

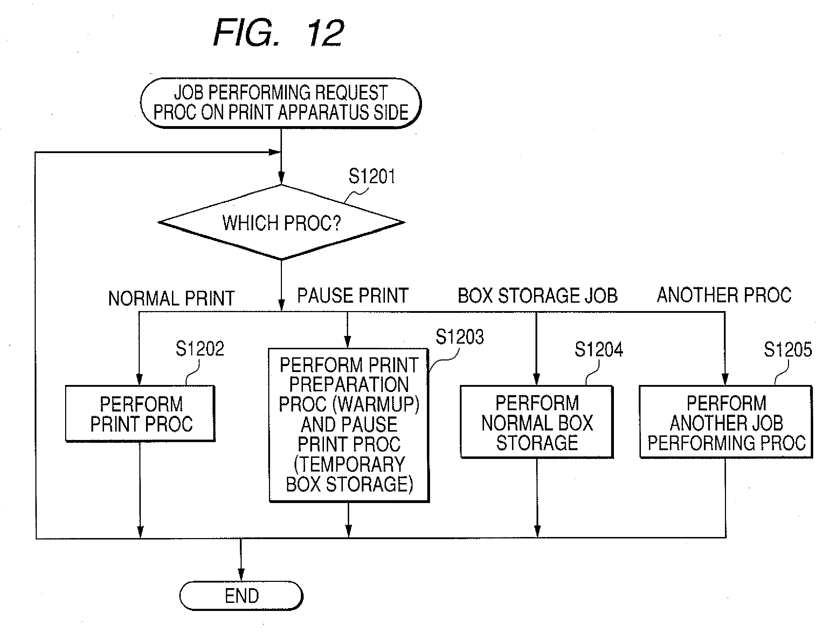

FIG. 12 is a flow chart illustrating an example of a third data processing procedure in the print apparatus according to the embodiment. Here, it should be noted that the third data processing procedure is equivalent to the job performing request process (S1103). Further, it should be noted that the third data processing procedure is achieved in a case where, for example in FIG. 9, the CPU of the print apparatus 742 at the location 0 loads the control program stored in the ROM 302, the HD 311 or the FD 312 to the RAM 203 and executes the loaded program. The third data processing procedure illustrated in the flow chart of FIG. 12 includes respective steps S1201, S1202, S1203, S1204 and S1205.

Initially, in step S1201, the information included in the print job is determined, and the print job is resultingly distributed to the corresponding process.

More specifically, it is determined based on the location information included in the print job whether to perform normal printing or to perform pause printing. Then, the flow advances to the step S1202 if it is determined to perform normal printing, and the flow advances to the step S1203 if it is determined to perform pause printing. That is, the normal print is performed if the location information included in the print job indicates the location 0 or the location 1 is within the permissible range from the viewpoint of location, and the pause print is performed if the location information indicates the location 2, which is outside the permissible range. In other words, the process is changed according to the determined result. On the other hand, when determining on the PC side whether to perform the normal print or to perform the pause print as in the first embodiment, the necessary information is included in the print job. For this reason, the print apparatus side changes between normal printing or pause printing according to the instruction in the print job without determining the kind of print based on the location information.

The flow advances to step S1204 if it is determined to store the data in the box area (normal box storage), and the flow advances to step S1205 if it is determined to perform another (different) job performing process. After that, the process ends.

As just described, after the processes in steps S1202, S1203, S1204 and S1205 end, the job performing request process on the print apparatus side ends.

Thus, in case of determining the permissible range on the print apparatus side as illustrated in FIG. 9, the permissible range is determined from the information of the print job in the step S1201, and the process is properly distributed to the corresponding process.

Here, if it is determined that the location indicated by the location information is within the permissible range, the normal print process is selected, and the flow advances to the step S1202.

On the other hand, if it is determined that the location indicated by the location information is outside the permissible range, the pause print process is selected, and the flow advances to the step S1203.

Further, as well as the case illustrated in FIG. 6, the flow advances to the step S1204 if the normal box storage is determined, and the flow advances to the step S1205 if another job is determined.

The normal print process is performed in step S1202, and the pause print process is performed in step S1203. That is, in step S1203, warmup of the print apparatus is performed, and at the same time the received print job is stored in the temporary box area.

Further, the conventional storage process to the box area is performed in step S1204, and another kind of job performing process is performed in step S1205.

(Third Embodiment)

In the above-described first and second embodiments, the attribute of the print job produced from the location determination information is distributed to the normal print or the pause print. However, such distribution may be performed using another attribute. More specifically, the attribute of the print job may be distributed based on surroundings information such as administrative department information and installation surroundings information of the print apparatus, user information such as administrative department information and user information of a PC, user information of a print job transmitter, and the like.

In the following, a case where the print job is distributed to the normal print mode or the pause print mode based on plural kinds of information for determining a permissible range will be described.

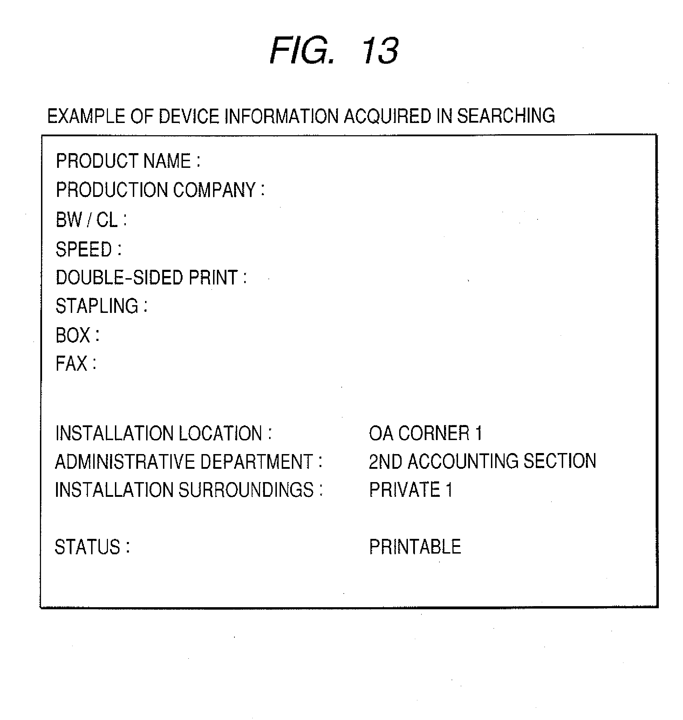

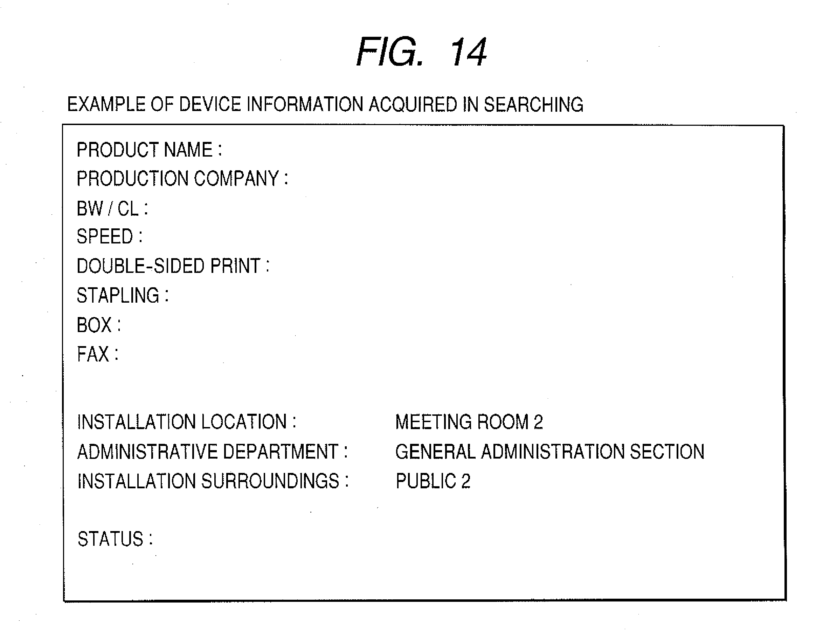

Each of FIG. 13 and FIG. 14 is a diagram illustrating an example of device information which is acquired from the print apparatus by the PC illustrated in FIG. 2. In particular, each of FIG. 13 and FIG. 14 illustrates an example of the information which is provided by the print apparatus when a client searches the relevant print apparatuses.

This is equivalent to an example of the information, illustrated in FIG. 6, which is provided by the print apparatus 631 and the print apparatus 641 when the searching is performed.

In FIG. 13, it is possible from the information "INSTALLATION LOCATION: OA CORNER 1" to know that the print apparatus has been installed at an OA corner 1, from the information "ADMINISTRATIVE DEPARTMENT: 2ND ACCOUNTING SECTION" to know that the print apparatus has been administrated by a second accounting section, and from the information "INSTALLATION SURROUNDINGS: PRIVATE 1" to know that the print apparatus has been installed in surroundings of a private 1.

In the installation surroundings of the present embodiment, a kind of installation location and a level of the surroundings are previously determined and set on the print apparatus side and/or the PC side. For example, the kind is public surroundings or private surroundings, and the level includes "PRIVATE 1" to "PRIVATE N". Here, the public surroundings are installation surroundings with a high possibility that an outsider or people outside exist adjacent the print apparatus, and the private surroundings are installation surroundings with a low possibility that an outsider or people outside exist adjacent the print apparatus. Further, it is possible by the attribute "ADMINISTRATIVE DEPARTMENT" that the print apparatus has been installed in the surroundings that users belonging to the section identified by the attribute "ADMINISTRATIVE DEPARTMENT" exist nearby.

FIG. 14 illustrates an example of the information which is provided by the print apparatus when the client searches the relevant print apparatus. This is equivalent to an example of the information, illustrated in FIG. 6, which is provided by the print apparatus 631 and the print apparatus 641 when the searching is performed.

In FIG. 14, it is possible from the information "INSTALLATION LOCATION: MEETING ROOM 2" to know that the print apparatus has been installed in a meeting room 2, from the information "ADMINISTRATIVE DEPARTMENT: GENERAL ADMINISTRATION SECTION" to know that the administrative department is a general administration section, and from the information "INSTALLATION SURROUNDINGS: PUBLIC 2" to know that the print apparatus has been installed in surroundings of a public 2.

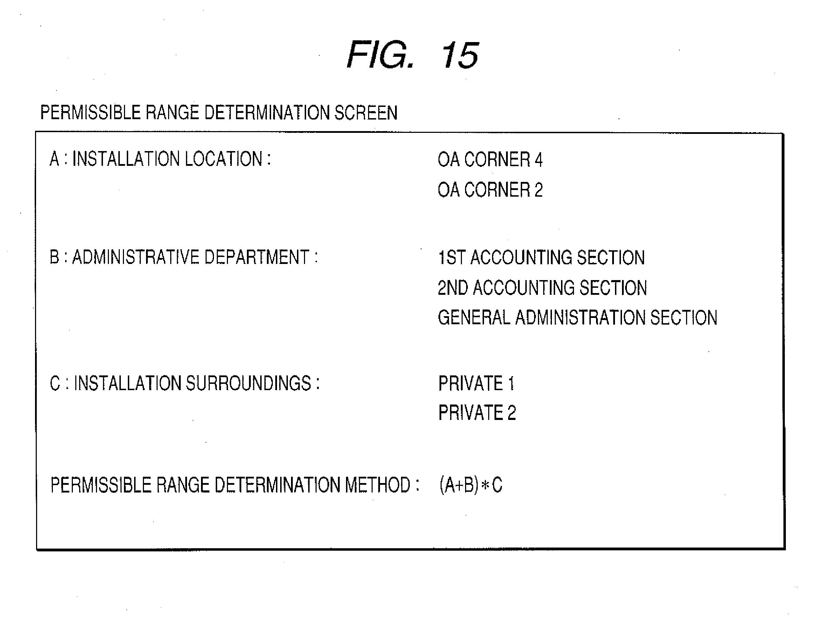

FIG. 15 is a diagram illustrating an example of a print setting screen to be displayed on the CRT 201 illustrated in FIG. 2. That is, FIG. 15 illustrates an example of the screen for setting a permissible range determination method on the client side. Incidentally, it is also possible to display the same display screen on the device side so as to set the permissible range determination method.

As illustrated in FIG. 15, after collecting the device information searched as illustrated in FIG. 13 and FIG. 14, the permissible range is set to the client or the print apparatus as described below.

In the present embodiment, an OA corner 4 and an OA corner 2 are registered as "A: INSTALLATION LOCATION" in the permissible range, a first accounting section, the second accounting section and the general administration section are registered as "B: ADMINISTRATIVE DEPARTMENT" in the permissible range, and the private 1 and a private 2 are registered as "C: INSTALLATION SURROUNDINGS" in the permissible range.

Consequently, the respective attributes are properly combined to determine the permissible range. In the present embodiment, as illustrated in FIG. 15, the permissible range determination method determined by (A+B)×C is displayed on the setting screen.

Subsequently, an example that the permissible range as illustrated in FIG. 15 has been set on the PC 621 illustrated in FIG. 6 and the device information as illustrated in FIG. 13 is acquired in the searching process will be described hereinafter.

More specifically, "INSTALLATION LOCATION: OA CORNER 1" is outside the permissible range, "ADMINISTRATIVE DEPARTMENT: 2ND ACCOUNTING SECTION" is within the permissible range, and "INSTALLATION SURROUNDINGS: PRIVATE 1" is within the permissible range. Further, according to the set permissible range determination method, this case is within the permissible range as the normal print if at least one of the installation location and the administrative department is within the permissible range and the installation surroundings is within the permissible range. Thus, according to set the permissible range determination method, the print job produced by the PC 621 is the normal print job. That is, in this case, since a possibility that output printed materials are viewed by an outsider or people outside is low, the normal print is performed.

Likewise, in the case where the device information as illustrated in FIG. 14 is acquired in the searching process, "INSTALLATION LOCATION: MEETING ROOM 2" is outside the permissible range, "ADMINISTRATIVE DEPARTMENT: GENERAL ADMINISTRATION SECTION" is within the permissible range, and "INSTALLATION SURROUNDINGS: PUBLIC 2" is outside the permissible range. Further, according to the set permissible range determination method, at least one of the installation location and the administrative department is within the permissible range and the installation surroundings are outside the permissible range. Thus, according to set the permissible range determination method, the print job produced by the PC 621 is the pause print job. That is, in this case, since there is a possibility that printed materials are viewed by an outsider or people outside if the normal print is performed, the pause print is performed.

Further, in a case where the information of the administrative department included in the attribute information of the PC which produced the print job conforms to the information of the administrative department of the selected print apparatus and the installation surroundings of the relevant print apparatus is "private", the normal print is performed. Furthermore, in cases other than the above case, the pause print is performed based on the pause print job. This is because, even if the installation surroundings of the print apparatus are "private", there is a case where the PC which produced the print job intends to prevent users of another department from viewing printed materials.

Furthermore, it is also possible on the print apparatus side to change over the print method between the normal print and the pause print on the basis of such administrative department information and installation surroundings information as described above. In this case, the processing procedures as illustrated in the flow charts of the second embodiment are applicable.

For example, in a case where the PC produces a print job, user information indicating a transmitter (i.e., transmitting person) of the produced print job is added to this print job. Then, the relevant print job to which the user information has been added is transmitted by the transmitter to a print apparatus side. After this, on the print apparatus side which received the relevant print job, if a user of the print apparatus determines that the transmitter indicated by the received user information conforms to the user included in the administrative department which has been set with respect to the print apparatus itself, the normal print is performed. On the other hand, if the user of the print apparatus determines that the transmitter indicated by the received user information is not included as the user in the relevant administrative department, the pause print is performed.

Further, information indicating the installation surroundings may be added to the user information. In such a case, even in a case where the user who is indicated by the user information included in the received print job conforms to the user included in the administrative department which has been set with respect to the print apparatus itself, the pause print is performed if the installation surroundings are "public".

In addition, the process may be changed over by determining whether to perform the normal print or to perform the pause print on the PC or the print apparatus in accordance with various combinations of attributes.

In any case, it is determined by which print method the print job should be processed, on the basis of the relation of the PC or the user transmitting the print job and the print apparatus actually performing the print job. In other words, the print method is determined based on the distance between the PC and the print apparatus, installation surroundings (e.g., a private location or a public location) of the print apparatus, a department which has been set in the PC or in the print job, and the relation between the user and the department set in the print apparatus. Using such information, it is determined whether or not it is admissible that the printed material may be seen by another person if printing starts before the user arrives at the print apparatus. Then, it is possible based on such determination to change over the print method between the normal print mode and the pause print mode.

FIG. 13, FIG. 14 and FIG. 15 merely illustrate examples used for describing the present invention. That is, it should be noted that the present invention does not depend on specific kinds of permissible range, contents of the permissible range, methods of determining the permissible range, and algorithms for determining the permissible range.

For this reason, it is apparent in the present invention that any kind of permissible range, any content of the permissible range, any kind of determination method of the permissible range, and any kind of algorithm for determining the permissible range are applicable as information concerning the permissible range.

(Fourth Embodiment)

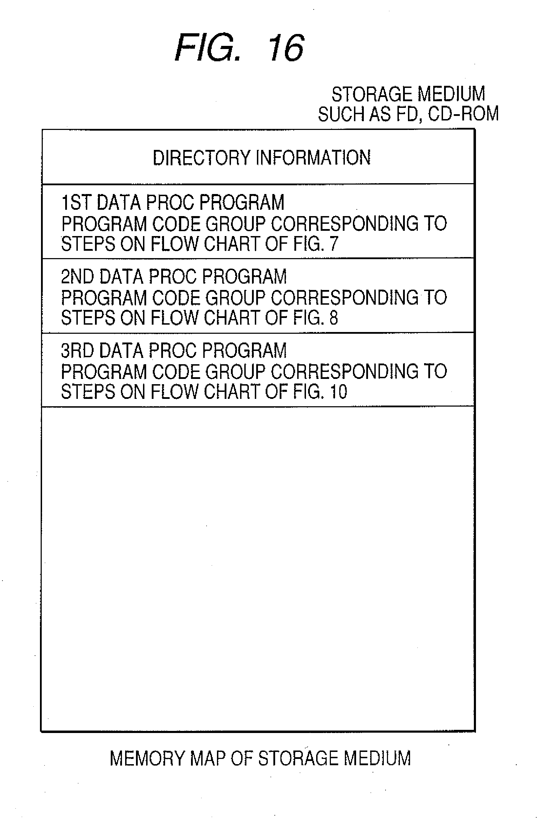

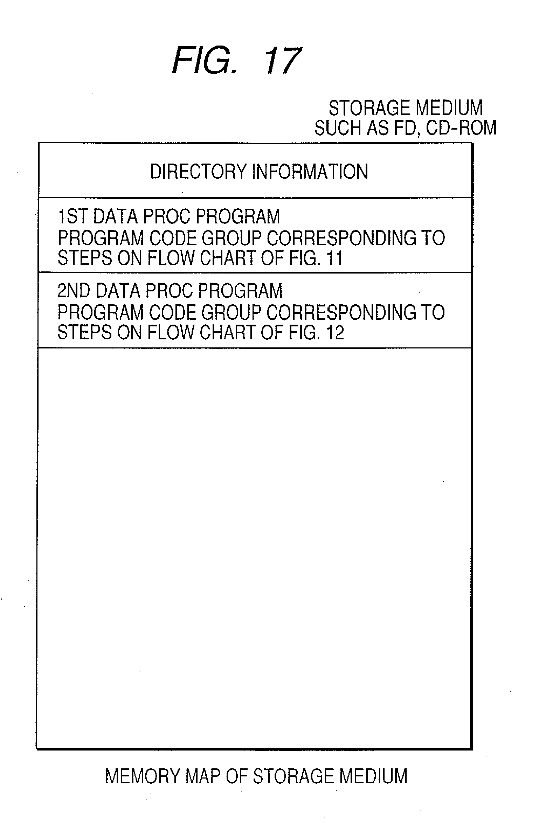

The configuration of a data processing program which can be read by the data processing apparatus according to the present invention will now be described with reference to the memory map illustrated in FIG. 16 or 17.

FIG. 16 shows the memory map of a storage medium which stores therein various kinds of data processing programs capable of being read by the data processing apparatus according to the present invention.

FIG. 17 also shows a memory map of a storage medium which stores therein various kinds of data processing programs capable of being read by the data processing apparatus according to the present invention.

Although not illustrated specifically, information for managing program groups stored in the storage medium such as version information, creator information, etc. may be stored, and information depending on an OS (Operating System) at a program reading side such as information of icons for displaying programs, etc. on a user interface may be stored.

Furthermore, data which belongs to various programs is also managed on a directory of the above-described storage medium. A program for installing various programs into a computer and a program for executing extraction when a program to be installed has been compressed may also be stored.

The functions illustrated in FIGS. 7, 8, 11 and 12 relating to the embodiments may be executed by a host computer based on a program installed externally. In this case, even if information groups which contain programs are supplied to an output apparatus by a storage medium such as a CD-ROM, a flash memory or an FD or from an external storage medium through a network, the present invention is applicable.

As described above, a storage medium storing program codes of software for achieving the functions of the above-described embodiments may be supplied to a system or an apparatus, and the present invention can be achieved also in a case where a computer (or CPU or MPU) in the system or the apparatus reads and performs the program codes stored in the storage medium.

In this case, the program codes themselves read from the storage medium achieve the new functions of the present invention, and thus the storage medium storing therein the relevant program codes constitutes the present invention.

Therefore, any form of a program, such as an object code, a program executed by an interpreter or script data to be supplied to an OS is available without requiring a program form if having the function of a program.

As the storage medium for supplying programs, for example, a flexible disk, a hard disk, an optical disk, a magnetooptical disk, an MO, a CD-ROM, a CD-R, a CD-RW, a magnetic tape, a nonvolatile memory card, a ROM, a DVD, or the like can be used.

In this case, the program codes themselves read from the storage medium achieve the functions of the above-described embodiments, and the storage medium storing the relevant program codes constitutes the present invention.

As another method of supplying programs, there is a method of connecting to a website on the Internet by using the browser of a client computer. The programs can be also supplied by downloading the computer program itself of the present invention or a file which is compressed and includes an automatic installing function into a recording medium such as a hard disk from the relevant website. Further, the supplying of programs can be also achieved by dividing program codes constituting the program of the present invention into plural files and downloading the respective files from different websites. That is, a WWW server or an ftp (file transfer protocol) server, which causes plural users to download program files for achieving the functional processes of the present invention by a computer, is also included in the present invention.

The programs of the present invention are encoded and stored into the storage medium such as CD-ROM's which are distributed to users, and key information for solving or decoding the encoded program is made to be downloaded for the user who clears a predetermined condition from the website through the Internet. In addition, the user performs the encoded program by using the key information to install the program into a computer. Thus, the supplying of programs can be also achieved in this way.

The present invention also includes the case where the functions of the above-described embodiments are achieved by executing the program codes read by a computer, and also the case where, for example, an OS (Operating System) functioning on the computer executes all the process or a part thereof based on the instruction of the program codes, thereby achieving the functions of the above-described embodiments by that process.

Further, the present invention also includes the case where the program codes read from a storage medium are written in a memory provided in a function expansion board inserted in the computer or a function expansion unit connected to the computer, and then a CPU provided on the function expansion board or the function expansion unit executes all the process or a part thereof based on the instruction of the relevant program codes, thereby achieving the functions of the above-described embodiments by that process.

According to the above-described embodiments, it is possible to automatically change over the designation concerning whether or not to retain the print job even if the user does not explicitly designate it in each print request.

While the present invention has been described with reference to the exemplary embodiments, it is to be understood that the invention is not limited to the disclosed embodiments. The scope of the following claims is to be accorded the broadest interpretation so as to encompass all such modifications and equivalent constitutions and functions.

## Claims

1. A data processing apparatus for supplying a print job to a printer connected to a network, the apparatus comprising:
a setting means (201), adapted to set a condition for determining whether the printer is to perform a pause print or not;
a determining means (201), adapted to determine which condition set by the setting means corresponds to the printer for performing the print job;
a producing means (201), adapted to produce a first print job for performing a non pause print or a second print job for performing a pause print in accordance with a determining result by the determining means; and
a transfer means (208), adapted to transfer the first print job or the second print job produced by the producing means to the printer.

2. A data processing apparatus as claimed in claim 1, wherein the second print job is a confidential print job for causing the printer to start printing in accordance with a user command at the printer.

3. A data processing apparatus as claimed in claim 1 or 2, wherein the setting means sets the condition based on location information indicating an installed position of the printer.

4. A data processing apparatus as claimed in claim 3, wherein the setting means sets the condition based on location information indicating an installed position of the printer and location information indicating an installed position of the data processing apparatus.

5. A data processing apparatus as claimed in any preceding claim, wherein the setting means sets the condition based on surroundings information indicating an installed surroundings of the printer.

6. A data processing apparatus as claimed in claim 5, wherein the setting means sets the condition based on surroundings information indicating an installed surroundings of the printer and attribute information of the data processing apparatus.

7. A printing apparatus including:
a setting unit (301), adapted to set a condition for determining whether a print job is to be performed as a pause print or not;
a determining unit (301), adapted to determine which condition set by the setting unit corresponds to an attribute of a received print job; and
a switching unit (301), adapted to switch between a pause print and a non pause print based on a determining result by the determining unit.

8. A printing apparatus as claimed in claim 7, wherein the attribute information includes location information indicating an installed position of the transmitter of the print job.

9. A printing apparatus as claimed in claim 8, wherein the setting unit sets the condition based on the location information included in the attribute information and location information indicating an installed position of the printing apparatus.

10. A printing apparatus as claimed in any one of claims 7 to 9, wherein the attribute information includes user information for specifying a transmitter of the print job.

11. A printing apparatus as claimed in claim 10, wherein the setting unit sets the condition based on user information included in the attribute information and surroundings information indicating an installed surroundings of the printing apparatus.

12. A print system including a printing apparatus as claimed in any one of claims 7 to 10, and a data processing apparatus as claimed in any one of claims 1 to 6.

13. A print job processing method comprising the steps of:
setting a condition for determining whether a printer on a network is to perform a pause print or not;
determining which condition set in the setting step corresponds to the printer for performing the print job;
producing a first print job for performing a non pause print or a second print job for performing a pause print in accordance with a determining result; and
transferring the first print job or the second print job produced in the producing step to the printer.

14. A print job processing method comprising the steps of:
setting a condition for determining whether a print job is to be performed as a pause print or not;
determining which condition set in the setting step corresponds to an attribute of a received print job; and
switching between a pause print and a non pause print based on the result of the determining step.

15. A program which when loaded into a programmable printing apparatus and executed performs a method as claimed in claim 13 or 14.

16. A machine readable storage medium storing a program as claimed in claim 15.
